# EUROPÄISCHE PATENTANMELDUNG

(11) **EP 3 954 853 A1**
(43) Veröffentlichungstag der Anmeldung: **16.02.2022**
(21) Anmeldenummer: 21191105.2
(22) Anmeldetag: 12.08.2021
(51) Int. Cl.: E06B 3/48

(54) **ANSCHLUSSPLATTE FÜR EIN TORBLATT**

(30) Priorität: 14.08.2020 DE 102020121454
(71) Anmelder: Alpha Deuren International BV, 6942 GB Didam (NL)
(72) Erfinder: KOELMAN, Marcel, 6515 XG Nijmegen (NL)
(74) Vertreter: Puschmann Borchert Kaiser Klettner Patentanwälte Partnerschaft mbB

(57) **Zusammenfassung**

Die Erfindung betrifft eine Anschlussplatte (1) für ein Torblatt eines Tores, das durch eine Antriebsvorrichtung ortsveränderbar ist, dabei weist die Anschlussplatte (1) eine Basis (20) auf, von der einseitig ein seitlicher Arm (18) abgeht, der endseits in eine abgewinkelte Befestigungsplatte übergeht, die Anschlussplatte (1) weist neben Anschlusspunkten (9,10) und Zugentlastungen (16), sowie Führungen (2, 3) zur Festlegung von Kabeln und/oder Installationsrohre elektrischer Einrichtungen auf, und es sind Zentrierverbindungen (7) für einen Verteilerkasten (13) auf der Anschlussplatte (1) vorhanden.

## Beschreibung

Die Erfindung betrifft eine Anschlussplatte, die zur Montage an ein motorisiertes Torblatt eines Tores eingesetzt wird.

Die Öffnungsweiten bei automatisierten, motorisierten Toren werden immer größer. Gleichzeitig werden dafür in zunehmendem Maße Sicherheitseinrichtungen benötigt, um für einen ordnungsgemäßen Betrieb Sorge zu tragen. Bei den zur Anwendung kommenden Sicherheitseinrichtungen handelt es sich insbesondere um Sensoren, Schlaffseilschalter, Sensorleisten, voreilende Lichtschranken, Lichtschranken jeglicher Ausführung, Lichtgitter, Radarsensoren, Mikroschalter usw. Für einen sicheren Betriebsablauf ist deshalb eine intakte Verkabelung derartiger Sicherheitseinrichtungen untereinander und in Verbindung mit der verwendeten Steuerung von besonderer Bedeutung.

Es gibt deshalb unterschiedliche Sicherheitseinrichtungen an beweglichen Maschinenteilen und Torblättern, insbesondere bei Sektionaltoren, bei denen die Hauptschließkante durch eine mechanische oder optische Kontaktleiste abgesichert sein kann. Eine derartige Absicherung eines Torblattes an dessen Hauptschließkante kann der US 5,426,295 entnommen werden. Dabei umfasst die optische Kontaktleiste eine längliche, im Allgemeinen flexible, rohrförmige Hülle, in der ein Lichtsender auf einer Seite und ein Empfänger auf der anderen Seite eingebaut sind.

Eine weitere Schließkantensicherung in Form einer Lichtschranke gibt die DE 203 07 701 U1 wieder. Derartige optische Kontaktleisten arbeiten nach folgendem Prinzip, dass der Sender ein gepulstes Signal abgibt, das der Empfänger auf der gegenüberliegenden Seite empfängt. Dabei reagiert der Empfänger im Falle einer Kollision mit einem Hindernis auf das Ausbleiben der dynamischen Informationen, was von der Auswertung erkannt wird und es dadurch zum Stillstand des Torblattes kommt.

Ferner werden Kontaktleisten zur Absicherung von Quetsch- und Scherstellen, und damit auch zum Einsatz bei Haupt- und Nebenschließkanten bei Torblättern, eingesetzt, in denen innerhalb eines Gummiprofiles ein Schaltstreifen enthalten ist. Derartige Kontaktleisten sind mit einem elektrischen Widerstand ausgerüstet, dessen Spannungsverhalten durch eine Elektronik kontinuierlich überwacht wird. Dadurch wird das komplette System inklusive Verbindungsleitungen auf Kurzschluss und Unterbrechung überwacht.

Weitere Sicherungseinrichtungen in Form von sogenannten Schlaffseilschaltern, die bei Sektionaltoren eingesetzt werden, deren Torblatt über seitlich angeordnete Seilzüge aus der Schließstellung in die Offenstellung und zurück verbracht wird, sind mit Kabelverbindungen ausgestattet. Eine derartige Sicherungsvorrichtung in Form einer Schlaffseilsicherung offenbart die DE 20 2011 000 984 U1.

Sicherheit wird als relativer Zustand der Gefahreneinschätzung angesehen, was stets für einen bestimmten Zeitraum und eine bestimmte Umgebung unter ganz bestimmten Bedingungen zutrifft. Deshalb unterliegt eine größtmögliche Sicherheit der vor Ort bestehenden Gegebenheiten der besonderen Aufmerksamkeit, damit die gesamte Verkabelung der einzelnen Sicherheitseinrichtungen ordnungsgemäß ausgeführt werden kann.

Die Aufgabe der Erfindung betrifft eine Vereinfachung des Verkabelungsaufwandes von Sicherheitseinrichtungen und Beleuchtungseinrichtungen bei der Montage von Toren auf der Baustelle.

Die Aufgabe der Erfindung wird durch die Merkmale des Anspruches 1 gelöst. Die sich an den Hauptanspruch anschließenden Unteransprüche geben dabei eine weitere Gestaltung des erfindungsgemäßen Gedankens wieder.

Torblätter für motorisierte Torausführungen werden heutzutage in einem Produktionsprozess so hergestellt und ausgeführt, dass die Monteure auf der Baustelle ein derartiges Tor schnellstmöglich fehlerfrei montieren können. Dabei werden beispielsweise die bei einem Sektionaltor vorhandenen einzelnen Segmente so vorbereitet, dass diese beispielsweise erst auf der Baustelle, z.B. durch Scharniere, miteinander verbunden werden. Aus diesen einzelnen miteinander scharnierend verbundenen Segmenten entsteht so ein gesamtes Torblatt. Ein solches Torblatt wird anschließend in seitlich ausgeführten Führungsschienen eingebracht, sodass dieses dann ortsveränderbar ist. Insbesondere an dem bodenseitigen Segment des Torblattes laufen Leitungsverbindungen von allen an dem ortsveränderbaren Torblatt befindlichen Sicherheitseinrichtungen und Beleuchtungseinrichtungen zusammen. Zur Vereinfachung und auch gleichzeitig zur Vermeidung falscher Montageausführungen können deshalb bereits während des Herstellungsprozesses im Werk auf dem Bodensegment links und rechts in den unteren Seitenbereichen Anschlussplatten der erfinderischen Art angebracht werden. In einer weiteren Ausführungsform ist es auch möglich, dass nur an einem unteren Seitenbereich eine Anschlussplatte verwendet wird.

In einem Fertigungsprozess ist es möglich, dass zunächst die Anbringung derartiger Anschlussplatten ausgeführt wird. Da vielfach die Montage der Sicherheitseinrichtungen oder dergleichen erst auf der Baustelle ausgeführt wird, ist es natürlich auch möglich zu diesem Zeitpunkt erst die Anschlussplatten vor Ort zu montieren. Anschließend können vor Ort die Kabelverbindungen zu den Sensorelementen oder dergleichen ausgeführt werden. Damit derartige Kabelverbindungen während des Aufbaues der Torelemente auf der Baustelle nicht beschädigt werden, können diese auf der Anschlussplatte an Aufnahmepunkten aufgewickelt und/oder festgelegt werden. So kann nach der mechanischen Montage des gesamten Torblattes einfach eine elektrische Verschaltung der Kabelverbindungen in einem Verteilerkasten, der auf der Anschlussplatte befestigbar ist, ausgeführt werden.

Ein derartiger Anschlusskasten dient somit zum Anschluss von Sicherheitseinrichtungen und anderen elektrischen Einrichtungen, die mit oder auf beweglichen Torblättern oder Maschinenteilen angeordnet sind. Der Verteilerkasten kann in einer passiven oder aktiven Ausführung, beispielsweise mit einem Mikrocontroller, verwendet werden. Durch den Verteilerkasten besteht die Möglichkeit, die auf der Anschlussplatte zuvor provisorisch festgelegten Kabelverbindungen nach der Montage des Torblattes innerhalb des Verteilerkastens betriebsmäßig zu verschalten, damit ein ordnungsgemäßer Betrieb des Tores zu einem späteren Zeitpunkt ohne weiteres möglich ist. Ein derartiger Verteilerkasten wird auf der Anschlussplatte an vorbezeichneten Befestigungs- und Zentriereinrichtungen platziert und auch durch Schraubelemente festgelegt.

Die Erfindung wird nachfolgend an einem möglichen Ausführungsbeispiel näher erläutert.
- Figur 1: zeigt eine Anschlussplatte in der Draufsicht;
- Figur 2: eine Anschlussplatte an einem Segment eines Sektionaltores montiert;
- Figur 3: eine Anschlussplatte im montierten Zustand mit zusätzlich aufgesetztem Verteilerkasten;
- Figur 4: wie Figur 3, jedoch mit einem zusätzlichen Spritzschutz versehen.

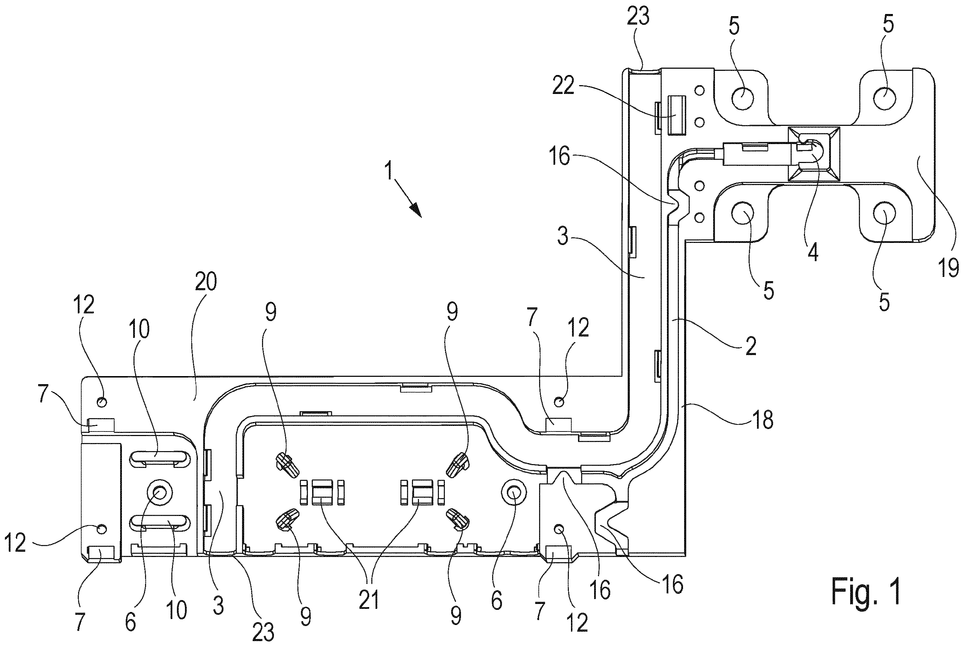

Das Ausführungsbeispiel nach der Figur 1 zeigt eine Anschlussplatte 1, die für eine Montage auf der rechten Seite eines unteren Segmentes 8 eines Sektionaltorblattes oder einer anderen Torausführung befestigt wird. Eine gleichartige Ausführung der Anschlussplatte 1 kann auch auf der linken Seite des unteren Segmentes 8 des Sektionaltorblattes montiert werden. Es ist auch möglich auf beiden Seiten, d.h. links und rechts, eine Anschlussplatte 1 zu verwenden. Dieses richtet sich insbesondere nach der Art der verwendeten technischen Einrichtungen, die mit Kabelverbindungen versehen sind. Bei der nachfolgenden weiteren Beschreibung wird zur Vereinfachung nur eine auf der rechten unteren Torblattseite montierten Anschlussplatte 1 gezeigt, wie diese in der Figur 1 wiedergegeben wird. Ebenfalls wird die nachfolgende Beschreibung anhand eines Sektionaltores mit einem Segment 8 veranschaulicht. Bei anderen Ausführungen von Torblättern können auch modifizierte Anschlussplatten eingesetzt werden.

Die Anschlussplatte 1 besteht im Wesentlichen aus einer länglichen oder in einer anderen Form ausgebildeten unteren Basis 20, von der auf der rechten oder linken Seite ein seitlicher Arm 18 nach oben gerichtet abgeht. Das Ende des seitlichen Armes 18 geht endseits in eine nach rechts auswärts gerichtete Befestigungsplatte 19 über.

Die Basis 20 der Anschlussplatte 1 ist so ausgebildet, dass neben Führungen 2, 3 für Kabel oder flexible Installationsrohe für Kabel auch beispielsweise Aufnahmepunkte 9 und 10 vorhanden sind, die es möglich machen, elektrische Kabelverbindungen nach dem Fertigungsprozess oder von Montagen von Sicherheitseinrichtungen oder dergleichen an den Torblattteilen aufzunehmen. In den Führungen 2 und 3 werden nach der Montage der Anschlussplatte 1 an dem Segment 8 oder an Teilen des Torblattes befestigte Sicherheitseinrichtungen oder andere elektrische Einrichtungen mit ihren elektrischen Verbindungen in die Führungen 2, 3 eingebettet. Bei einer Verwendung von flexiblen Installationsrohren können diese auch in die Führungen 3 eindrückt werden, wobei gleichzeig die Installationsrohre beim Eintritt und auch beim Austritt aus der Anschlussplatte1 mittels Fixierungen 23 festgelegt werden. Nach der Fixierung mit der Anschlussplatte 1 werden anschließend die Enden der Kabelverbindungen an den Aufnahmepunkten 9, 10 aufgerollt festgelegt. Durch die Kabelführungen 2, 3 die auch mit Zugentlastungen 16 versehen sein können, können beispielsweise auch Kabel von einer vorlaufenden Sensoreinheit der Anschlussplatte 1 zugeführt werden. Die Anschlussplatten 1, links oder rechts, werden auf dem Segment 8 über Bohrungen 6 und Schraubelemente mit dem Segment 8 fest verbunden. Die notwendigen Schraubelemente können auch in Halterungen 21 auf der Basis 20 für die spätere Montage bereitgestellt werden. Die seitlich an der Anschlussplatte 1 angeformte Befestigungsplatte 19 wird über Befestigungsbohrungen 5, beispielsweise an einer Bodenkonsole 11, befestigt. Bodenkonsolen 11 werden bei ortsveränderbaren Sektionaltorblättern eingesetzt. Um die Torblätter aus einer Schließstellung heraus nach oben hin zu verbringen werden Tragmittel in Form von Tragseilen eingesetzt, die mit einer Sicherungseinrichtung versehen sind. Bei einem Riss eines derartigen Tragseiles wird es zum Ansprechen der Sicherungseinrichtung in Form eines Schlaffseilschalters kommen. Die Einrichtung des Schlaffseilschalters ist auf der Bodenkonsole 11 möglich.

Zur Befestigung weiterer Kabel sind auch im Bereich der Befestigungsplatte 19 weitere Festlegungspunkte 22 vorhanden. In die Führung 2 eingelegte Kabel werden gleichzeitig durch in die Basis 20 eingearbeitete Zugentlastungen 16 gehalten.

Um auf der Baustelle auf der Anschlussplatte 1 den Verteilerkasten 13 montieren zu können, sind Zentrierverbindungen 7 vorhanden. Diese Zentrierverbindungen 7 ermöglichen, den Verteilerkasten 13 mit einem Druck in Richtung auf die Anschlussplatte 1 zu fixieren. Der Verteilerkasten 13 wird dabei mit seitlichen Laschen zwischen den Zentrierverbindungen 7 platziert. Befestigt wird der Verteilerkasten 13 anschließend über Schraubelemente in Verbindung mit Gewindebohrungen 12 in der Anschlussplatte 1.

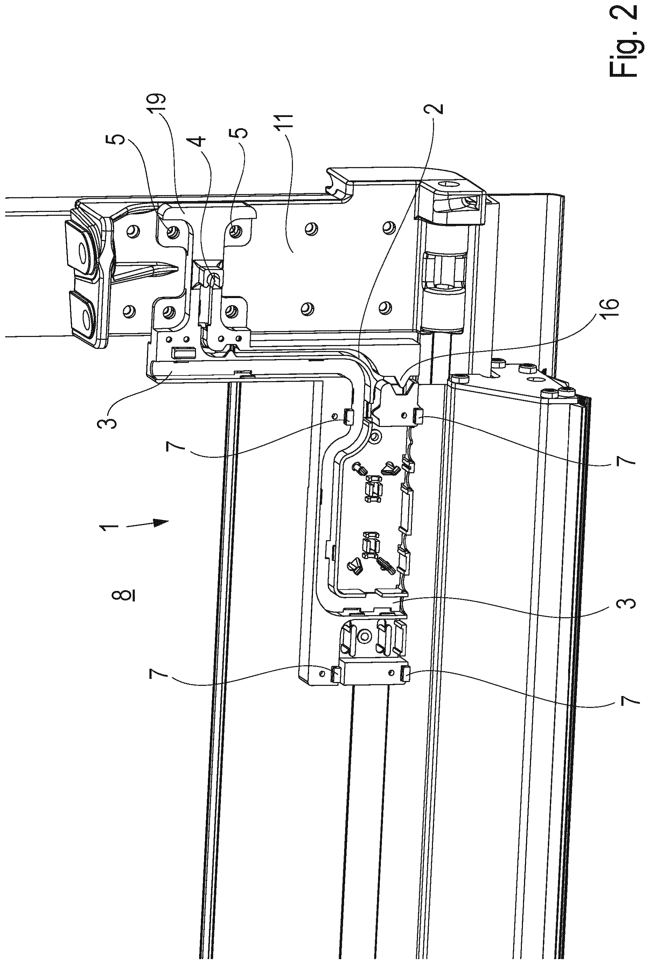

Eine Anschlussplatte 1, die auf dem Segment 8 befestigt wurde, zeigt die Figur 2. Durch diese Darstellung wird insbesondere deutlich, dass die Befestigungsplatte 19, die mit der Anschlussplatte 1 verbunden ist, auch mit der Bodenkonsole 11 verbunden wird.

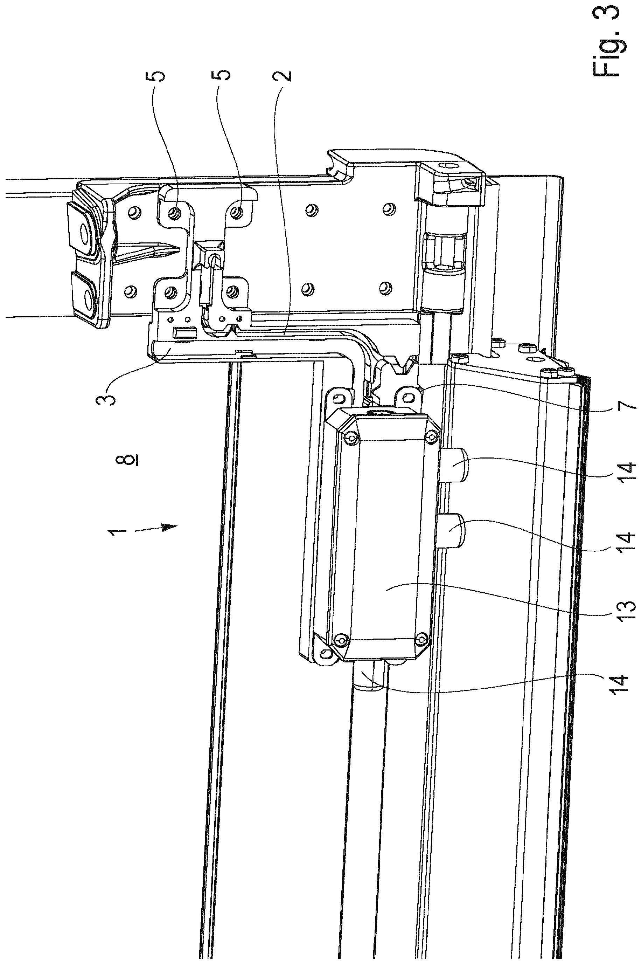

Eine Anschlussplatte 1 mit aufgesetztem Verteilerkasten 13, kann der Figur 3 entnommen werden. Der Verteilerkasten 13 ist mit einer entfernbaren Abdeckung verschlossen. Gleichzeitig befinden sich seitlich in dem Verteilerkasten 13 Kabeleinführungen 14 für Anschlussmöglichkeiten von Sicherheitseinrichtungen oder Beleuchtungseinrichtungen.

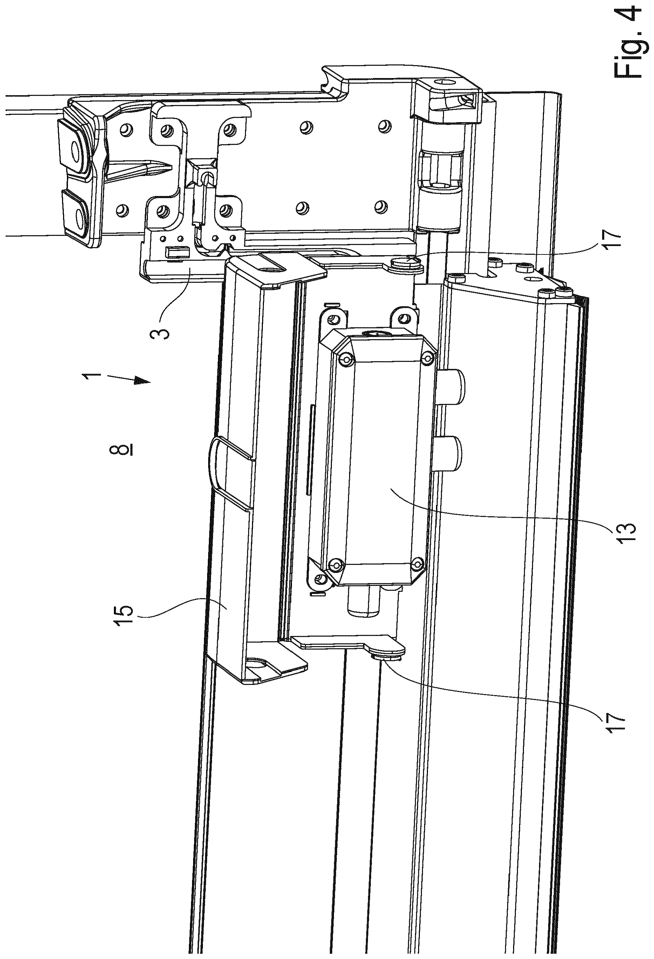

Eine bevorzugte Ausführungsform der Anschlussplatte 1 in Verbindung mit dem Verteilerkasten 13 kann auch der Figur 4 entnommen werden. Dabei wird der Verteilerkasten 13 durch einen Spritzwasserschutz 15 gegen äußeres Spritzwasser während des Betriebes des Tores geschützt. Um die Zugänglichkeit zum Verteilerkasten 13 stets sicherzustellen, ist der Spritzwasserschutz 15 so gestaltet, dass dieser einen verschwenkbaren Teil aufweist, der in der Verschlussstellung durch seitliche Arretierungen 17 in dieser Position gehalten wird.

Die Anschlussplatte 1 kann aus Leichtmetall oder Kunststoff kostengünstig hergestellt werden.

### Bezugszeichen

- 1: Anschlussplatte
- 2: Führung
- 3: Führung
- 4: Bohrung
- 5: Befestigungsbohrung
- 6: Bohrung
- 7: Zentrierverbindung
- 8: Segment
- 9: Aufnahmepunkt
- 10: Aufnahmepunkt
- 11: Bodenkonsole
- 12: Gewindebohrungen
- 13: Verteilerkasten
- 14: Kabeleinführung
- 15: Spritzwasserschutz
- 16: Zugentlastung
- 17: Arretierung
- 18: Seitlicher Arm
- 19: Befestigungsplatte
- 20: Basis
- 21: Halterung
- 22: Festlegungspunkt

## Patentansprüche

1. Anschlussplatte (1) für ein Torblatt eines Tores, das durch eine Antriebsvorrichtung ortsveränderbar ist, **dadurch gekennzeichnet, dass** die Anschlussplatte (1) eine Basis (20) aufweist, von der einseitig ein seitlicher Arm (18) abgeht, der endseits in eine abgewinkelte Befestigungsplatte übergeht, die Anschlussplatte (1) weist neben Anschlusspunkten (9,10) und Zugentlastungen (16), sowie Führungen (2, 3) zur Festlegung von Kabeln und/oder Installationsrohre elektrischer Einrichtungen auf, und es sind Zentrierverbindungen (7) für einen Verteilerkasten (13) auf der Anschlussplatte (1) vorhanden.

2. Anschlussplatte nach Anspruch 1, **dadurch gekennzeichnet, dass** die Anschlussplatte (1) für eine links- und rechtsseitige Montage auf dem Torblatt in einer rechten und einer linken Ausführung vorliegt.

3. Anschlussplatte nach den Ansprüchen 1 und 2, **dadurch gekennzeichnet, dass** der Verteilerkasten (13) mittels der Zentrierverbindungen (7) auf der Anschlussplatte 1 auswechselbar anordbar und vorzugsweise durch Verbindungselemente befestigbar ist.

4. Anschlussplatte nach den vorhergehenden Ansprüchen, **dadurch gekennzeichnet, dass** die Anschlussplatte (1) aus Leichtmetall oder Kunststoff besteht.

5. Anschlussplatte nach Anspruch 1, **dadurch gekennzeichnet, dass** die unterschiedlichen auf der Anschlussplatte (1) festgelegten Kabelausführungen innerhalb des Verteilerkastens (13) verschaltbar sind.

6. Anschlussplatte nach den Ansprüchen 1 und 5, **dadurch gekennzeichnet, dass** der Verteilerkasten (13) in einer aktiven oder in einer passiven Ausführung auf die Zentrierverbindungen (7) aufgesetzt werden kann.

7. Anschlussplatte nach einem oder mehreren der vorhergehenden Ansprüche, **dadurch gekennzeichnet, dass** der Teilbereich der Anschlussplatte (1) auf dem der Verteilerkasten (13) angeordnet ist, durch einen verschwenkbaren Spritzschutz (15) gesichert ist.

8. Anschlussplatte nach einem oder mehreren der vorhergehenden Ansprüche, **dadurch gekennzeichnet, dass** die Anschlussplatte (1) am unteren, bodenseitigen Bereich des Torblattes auf der linken und rechten Seite angeordnet ist.

9. Tor mit einem motorisierten, ortsveränderbaren Torblatt, das mit mindestens einer Anschlussplatte (1) nach einem oder mehreren der vorhergehenden Ansprüche ausgestattet ist.
